# EUROPÄISCHE PATENTANMELDUNG

(11) **EP 1 741 677 A1**
(43) Veröffentlichungstag der Anmeldung: **10.01.2007**
(21) Anmeldenummer: 05014639.8
(22) Anmeldetag: 06.07.2005
(51) Int. Cl.: C02F 1/48, C02F 5/00

(54) **Verfahren und Vorrichtung zur Behandlung von Wasser**

(71) Anmelder: Schulte, Hartmut, 63695 Glauburg (DE)
(72) Erfinder: Schulte, Hartmut, 63695 Glauburg (DE)
(74) Vertreter: Müller-Wolff, Thomas

(57) **Zusammenfassung**

Verfahren und Vorrichtung zur Behandlung von Wasser mit einem gepulsten, elektromagnetischen Feld, bei dem über eine Strecke des wasserführenden Rohres 15 beidends über Induktionsspulen 16 ein Magnetfeld erzeugt wird, dessen Intensität durch Steuerung der Frequenz von Impulsen einstellbar ist, die in einem integrierten Schaltkreis IC 2 erzeugt werden. Die Intensität wird durch Begrenzen der Frequenz mit einem Durchflussmesser 8 in Abhängigkeit der Wasserdurchgangsleistung oder über ein fest einstellbares Potentiometer 7 in Abhängigkeit des mittleren Wasserverbrauchs und des Rohrdurchmessers geregelt, wobei die sich ändernde Frequenz des in dem IC 2 gebildeten Summensignals, erzeugt aus dem Signal eines Rampengenerators 4, dessen Frequenz von einem Scanner 6 über einen Zählerbaustein 5 variiert wird, und dem Signal eines spannungsabhängigen Generators 3, ein frequenzgesteuertes erstes Signal darstellt, das über eine Transistorbrückenschaltung 9 und einen Gegentaktverstärker 10 umgeformt und anschließend wiederum zu einem Signal aus einem Spannungsstromwandler 11 mit angeschlossenem Leistungsnetzteil 12 addiert wird. Das erstellte Signal wird auf den Eingang einer Verstärkerstufe 13 gegeben und von dort aus als Wechselspannung, die hier als "Gegentaktspannung" genutzt wird, auf die wirkungsgleichgerichteten Windungen der Induktionsspulen 16 gelegt, deren elektromagnetisches Feld sich mit den physikalischen Eigenschaften der durchfließenden Frequenz ändert, wobei die zeitliche Änderung der Spannung pro Puls mindestens 20 Volt pro Mikrosekunde beträgt. Der Begriff "Gegentaktspannung" soll zum Ausdruck bringen, dass eine Umpolung des Vorzeichens (wie bei einer Wechselspannung) erfolgt.

## Beschreibung

Die Erfindung betrifft ein Verfahren und eine Vorrichtung, bei der Wasser mit einem elektromagnetischen Feld behandelt wird, wobei über eine Rohrmessstrecke beidends durch gewickelte Induktionsspulen je ein Magnetfeld erzeugt wird, dessen Intensität durch Steuerung der Frequenz von Impulsen, die mit einem Generator erzeugt werden, einstellbar ist und die Intensität durch jeweils einen Schalter mit zugeordnetem Potentiometer für die Wasserdurchgangsleistungssteuerung sowie einen zweiten Schalter für die Härtekontrolle mit zugeordnetem Potentiometer für die Spannungsstromwandlung geregelt wird, wobei die sich ändernde Frequenz des Signals aus einem Rampengenerator mit der Frequenz des Signals aus dem Generator addiert wird und daraus ein frequenzgesteuertes Signal erzeugt wird, das wiederum zu dem Signal aus dem Spannungsstromwandler zu einem Signal addiert wird, das eine Sammelfrequenz darstellt, wobei die vom Generator ausgehende Frequenz in dem Niederfrequenzverstärker über eine weiter einmündende Frequenz führt und diese Sammelfrequenz durch den Niederfrequenzverstärker gewandelt wird und über einen Ausgang bzw. Verteiler beidends über die Länge der Rohrmesstrecke begrenzende, wirkungsgleichgerichtete Windungen mit den Impulsen versorgt werden, deren elektromagnetisches Feld die physikalischen Eigenschaften der durchfließenden Frequenz in Abhängigkeit der Einstellung der Schalter ändert, wobei der Ableitung aus dem Generator die Ableitung aus dem härtebezogenen Spannungsstromwandler nachgeordnet ist und sich die Ableitungen mit der Ableitung aus dem Rampengenerator und dem nachgeschalteten Generator zu der Frequenz addiert, wobei die Intensität beider Generatoren gemeinsam über den Niederfrequenzverstärker an den Ausgang der Magnetlinien gegeben wird.

Bei der Behandlung von Trinkwasser, das häufig als Grundwasser aus tiefen Gesteinsschichten gewonnen wird, ist vor allem auf das Calcium-Hydrogen-Karbonat zu achten, das als Verursacher von Kalksteinablagerungen und Verkrustungen in den Rohrwandungen bekannt ist. Die Gesamthärte des Wassers setzt sich dabei aus der sogenannten Karbonathärte (Summe der gelösten Erdalkali-Hydrogenkarbonate) und der Nichtkarbonathärte (weitere, gelöste Erdalkali-Salze) zusammen. Mit anderen Worten: Je mehr Kalk im Wasser gelöst ist, desto härter ist das Wasser. Die damit verbundenen Kalkabscheidungen vermindern den Wirkungsgrad von Heizungen, verringern die Rohrdurchmesser und bedingen bei stark verminderten Rohrdurchmessern einen Druckverlust, der ein sinnvolles Benutzen des Leitungssystems nicht mehr zulässt. Dies ist mit Kosten und gesteigertem Energieverbrauch verbunden.

Der sich bildende Kalksteinansatz kann verschieden verhindert werden:
1. durch lonenaustauscher, in denen die Calciumionen sowie das Hydrogencarbonat aus dem Wasser genommen werden und mit Natriumionen sowie Chloridionen ersetzt werden
2. durch gesteuerte Zugabe von Phosphatchemikalien, die verhindern sollen, dass harte Ablagerungen entstehen; der Kalk soll durch die Chemikalien in Lösung gehalten werden bzw. mit den Chemikalien einen stabilen, chemisch inerten Schlamm bilden, den der Wasserstrom austrägt
3. durch Behandlung des Wassers vor dem Eintritt in das System mittels elektromagnetischer Felder, also auf physikalische Art; die vorhandenen Ionen bilden dabei mikrofeine, langzeitstabile Kalkpartikel mit deutlich veränderter Morphologie, die mit der im Wassern enthaltenen Kohlensäure im Gleichgewicht stehen und keine Neigung mehr zeigen, an den Rohrwänden anzuhaften

Im Vergleich machen die o. g. Methoden 1) und 2) das regelmäßige Austauschen des sich verbrauchenden lonentauschers bzw. das Nachfüllen des Vorratsbehälters mit Phosphatchemikalien notwendig. Zusätzlich muss das Leitungsnetz mit einer Öffnung zum Einsetzen des lonentauschers bzw. zum Zusetzen der Chemikalien versehen werden, was mit der zusätzlichen Gefahr einer erhöhten Keimbelastung einhergeht.

Methode 3) kommt hingegen ohne Chemikalien aus, erfordert kein geöffnetes Leitungssystem und behandelt das Wasser auf eine rein physikalische Art. Hohe Wassertemperaturen beeinflussen den Effekt kaum und vorhandene Verkrustungen werden durch die erzeugten, geringen Mengen freier Kohlensäure im fließenden Wasser zusätzlich abgebaut.

Aus der EP-A-0 357 102 ist ein gemäß Methode 3) arbeitendes Gerät zur Behandlung von Flüssigkeiten bekannt, das die Ablagerung von Calciumkarbonat und ähnlichen Bestandteilen verhindern soll. Das Gerät besteht aus in einiger Distanz zueinander um ein Rohr gewickelten Spulen, die ein elektromagnetisches Feld erzeugen. Dabei werden in Abhängigkeit von der Strömungsgeschwindigkeit im Rohr Impulse gebildet, deren Amplitude und Frequenz zur Steuerung von zwei Magnetfeldern herangezogen werden. Die Magnetfeldlinien der erzeugten Magnetfelder sind einander entgegengerichtet mit dem Ergebnis, dass in der Trennebene der beiden Felder die magnetischen Feldlinien senkrecht zur Durchflussrichtung des Flüssigkeitsstroms angeordnet sind. Daher beeinträchtigen die Spulen gegenseitig ihr Feld.

Hingegen ist aus der EP 0 460 248 B1 ein Verfahren zur Behandlung von Wasser mit einem elektromagnetischen Feld bekannt, bei dem über die Messstrecke eines Rohres beidends durch gewickelte Induktionsspulen je ein gleich zur Strömungsrichtung orientiertes Magnetfeld erzeugt wird, dessen Intensität durch Steuerung der Frequenz von Impulsen, die mit einem Generator erzeugt werden, einstellbar ist. Hier verstärken sich die erzeugten Felder. Die Wirksamkeit dieses Verfahrens ist von der staatlichen Prüfstelle des ÖVGW nach der Prüfrichtlinie W 35 überprüft und in einem Gutachten bestätigt worden. Der Wirkungsgrad beträgt mehr als 90 %.

Die Intensität wird durch jeweils einen Schalter mit zugeordnetem Potentiometer in Abhängigkeit der Wasserdurchgangsleistung und der Wasserhärte geregelt. Die sich ändernde Frequenz des Signals aus einem Rampengenerator wird mit der Frequenz des Signals aus einem Generator addiert und daraus ein frequenzgesteuertes Signal erzeugt, das zu dem Signal aus einem Spannungsstromwandler zu einem Endsignal addiert wird, welches eine Sammelfrequenz darstellt. Die Sammelfrequenz wird durch den Niederfrequenzverstärker gewandelt und über einen Ausgang bzw. einen Verteiler beidends über die Länge der Messstrecke der genannten Vorrichtung auf begrenzende, wirkungsgleichgerichtete Windungen gegeben, sodass deren elektromagnetisches Feld das durchfließende Wasser in Abhängigkeit der Einstellung der o. g. Schalter verändert.

Der Härtegrad des Wassers ist jedoch abhängig vom Ursprung des Wassers und kann versorgerbedingt variieren. Der Verbrauch unterliegt häufig gleichfalls starken Schwankungen. Daher müssen Anlagen dieses Typs vorsorglich mit erhöhter Leistung betrieben werden, um einer Schwankung der Wasserhärte sowie kurzfristigen Lastspitzen Rechnung zu tragen. Alternativ muss eine solche Anlage mit aufwendiger Regelelektronik und ionenselektiven Sensoren nachgerüstet werden, um die momentane Wasserhärte exakt zu bestimmen und die Leistung des Systems anzupassen.

Aufgabe der vorliegenden Erfindung ist es daher, ein Verfahren und eine Vorrichtung - im Folgenden auch als Calc Tech Gerät bezeichnet - zur Behandlung von Wasser mit elektromagnetischen Feldern bereitzustellen, die den angestrebten Effekt bei situationsabhängig angepasstem Energieverbrauch ohne aufwendige Mess- und Regelelektronik zugänglich macht.

Erfindungsgemäß wird diese Aufgabe durch die im Patentanspruch 1 angegebenen Merkmale gelöst. Weitere Vorteile der erfindungsgemäßen Vorrichtung ergeben sich aus den abhängigen Ansprüchen, sowie den Ausführungsbeispielen der nachfolgenden Beschreibung.

Bei der Behandlung von Leitungswasser mit Hilfe von gepulst betriebenen Induktionsspulen kommen sehr unterschiedliche Faktoren zum tragen: a) momentaner Verbrauch b) Härtegrad des Wassers c) zusätzliche Verunreinigungen im Wasser d) Anzahl der Pulse e) Puls-Charakteristik. Während der momentane Wasserverbrauch mit Hilfe eines Flussmessers einfach bestimmt werden kann, ist der Härtegrad des Wassers sowie die Konzentration an weiteren Verunreinigungen wie z. B. Mangan oder Eisen starken Schwankungen unterworfen. Die Anzahl der Pulse pro Zeiteinheit ist der Intensität der Behandlung bzw. des Feldes proportional und erlaubt die Kontrolle der Gesamtleistung. Diese musste in der Vergangenheit vorsorglich etwas höher als benötigt eingestellt werden, um Schwankungen der Wasserqualität bezüglich der Punkte b) und c) abzufangen.

Umfangreiche Langzeittests führten zu folgendem, überraschendem Ergebnis: Die Effizienz der Anlage wird wesentlich durch e), also die Art der erzeugten Pulse, hierbei hauptsächlich durch den Spannungsgradienten des über die Anschlüsse auf die Induktionsspulen gegebenen Signals in Abhängigkeit der Zeit, beeinflusst. Während sinusförmige Spannungswechsel mit Frequenzen im Hertz-Bereich kaum eine Veränderung des Wassers bewirkten, zeigte sich ein sprunghafter Anstieg der Konzentration an mikrofeinen Kalkpartikeln, wenn die Zeitdomäne des Spannungspulses im Bereich von Mikrosekunden lag. Veränderungen der Wasserqualität konnten bei geringer Fließgeschwindigkeit bereits mit 70 Hz Pulsfrequenz und einem Gradienten um 20 Volt bis hin zu 300 Volt pro Mikrosekunde festgestellt werden. Gute bis sehr gute Ergebnisse ergaben sich mit 80 Volt bis 232 Volt pro Sekunde. Als guter Richtwert konnte 90 Volt bis 110 Volt Spannungsdifferenz pro Mikrosekunde identifiziert werden. Pulse mit dieser Pulscharakteristik zeigten bei reiner Variation der Pulsfrequenz in Abhängigkeit der Wasserdurchgangsleistung eine trotz schwankender Wasserhärte konstante Wirksamkeit bei reduziertem Energieverbrauch.

Daher kann bei geeigneter Einstellung der Pulscharakteristik auf eine aufwendige Regeleinrichtung zur Kontrolle sowie Berücksichtigung der Wasserhärte verzichtet werden. Durch Integration der sonstigen, benötigten Bauteile zur Signalerzeugung in einem Schaltkreis, also einem IC 2, kann eine vereinfachte, weniger störanfällige Vorrichtung mit höherer Effizienz und geringerem Platzbedarf bereitgestellt werden.

Diese erfindungsgemäße Vorrichtung, das Calc Tech Gerät, stellt somit bei geringerem Energieverbrauch und vereinfachter, weniger störanfälliger Bauweise die angestrebte Wirkung bereit: Das Calc Tech Gerät beeinflusst die im Wasser befindlichen Kalkmoleküle und bekämpft die beim Erhitzen entstehenden Verkrustungen in Boilern, Heizkesseln, Wasch- und Spülmaschinen, Kaffeemaschinen, Rohrleitungen, Armaturen usw. Darüber hinaus wird das durch das Calc Tech Gerät behandelte Wasser stabilisiert und spült die sich trennenden Verkrustungen mit dem Wasserfluss aus, ohne die Qualität des Wassers zu verändern. Die Realisierung erfolgt durch eine automatische Steuerung der Intensität der Taktsignale zur Kalkwasserbehandlung. Im Gegensatz zur chemischen Behandlung wird das Wasser nicht enthärtet, es werden keine Mineralien entzogen, es werden keine Chemikalien zugesetzt, die Qualität und die Härte des Wasser bleiben erhalten. Bei unbehandeltem Wasser haben die Kalkkristalle (Calciumkarbonat CaCO₃) eine Größe von ca. 150 µm und eine nadelförmige Struktur. Durch die nadelförmige Struktur haben diese Kristalle eine sehr hohe Haftfähigkeit (Verfilzen). Die Kalkkristalle, die nach der erfindungsgemäßen Behandlung entstehen, haben eine mikrofeine Pulverstruktur mit Teilchengrößen um 20 µm und weniger. Sie können sich nicht mehr untereinander verklammern und haften deshalb nicht mehr an Oberflächen von Rohren, Heizstäben usw. Die mikrofeinen Kalkkristalle bleiben als wertvoller Bestandteil erhalten und werden vom fließenden Wasser ausgetragen.

Zur Erläuterung der verschiedenen nicht begrenzenden Ausführungsbeispiele der erfindungsgemäßen Vorrichtung dienen die in den Fig. 1 - 6 wiedergegebenen Prinzipbilder.

Es zeigen:
- Fig. 1: Einstellung des VD-Wertes für konstante Wasserdurchgangsleistungen
- Fig. 2: Blockdiagramm des erfindungsgemäßen Aufbaus einer ein Magnetfeld mit wechselnder Frequenz und Polarität erzeugenden Schaltung
- Fig. 3: Montagebeispiel für eine Boilerbeheizung mit Insel-Lösung
- Fig. 4: Montagebeispiel für eine Zentralbeheizung mit Boiler
- Fig. 5: Kühlkreislauf mit Kaltwasserbehandlung
- Fig. 6: Kühlkreislauf mit Kalt-/Warmwasserbehandlung

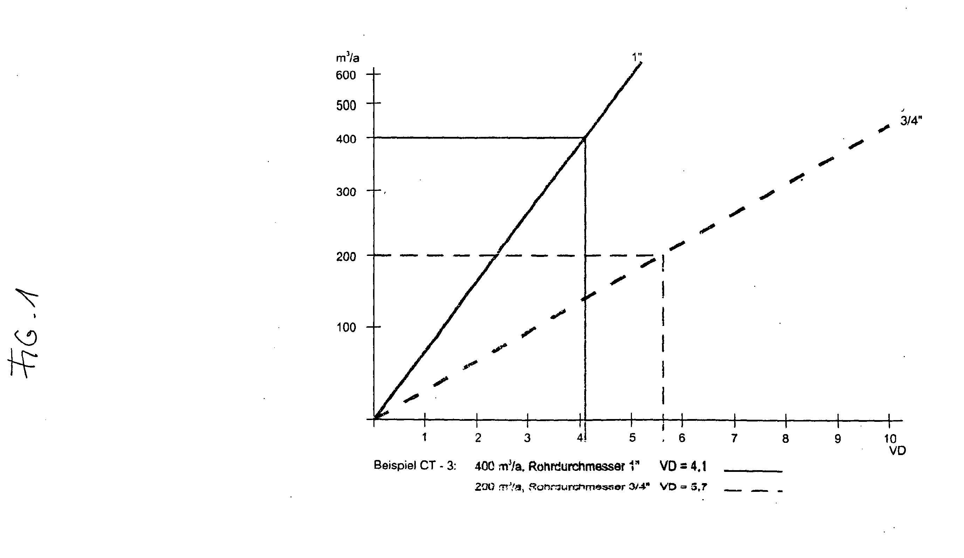

Bei Wasserleitungssystemen mit konstant niedrigem Wasserverbrauch wie z. B. Trinkwasserspringbrunnen kann eine sehr einfache Ausführungsform des Calc Tech Gerätes mit einer Spule verwendet werden, welche nur eine fest eingestellte Pulsfrequenz vorsieht. Auch diese Ausführungsform sieht eine weitere Anpassung an die nutzerseitig gegebenen Bedingungen mit Hilfe eines Potentiometers 7 (sog. VD-Wert) vor. Das Diagramm für die Einstellung zeigt Fig. 1.

### VD-Einstellung:

Ermittlung des Einstellwertes:
- Ermitteln Sie den Wasserverbrauch.
- Ermitteln Sie den Rohrdurchmesser.
- Ziehen Sie eine senkrechte Linie von der Verbrauchsskala zu der dem Rohrdurchmesser entsprechenden diagonalen Linie.
- Vom Schnittpunkt aus ziehen Sie nun eine waagerechte Linie auf die VD-Skala.
- Der Kreuzpunkt ist Ihr VD-Einstellwert.

Der VD-Wert stellt somit einen Regelparameter dar, welcher Rohrdurchmesser, mittleren Wasserverbrauch und die Anzahl der Wicklungen der Induktionsspulen auf dem wasserführenden Rohr berücksichtigt. Dadurch kann die Vorrichtung auf verschiedene Rohr- und Leitungssysteme individuell eingestellt werden.

Der Feldlinienverlauf kann durch die Anzahl der entlang der Messtrecke des Rohres (15) angeordneten Spulen variiert werden. So arbeiten die meisten Calc Tech Geräte mit 2 einige aber auch mit 4 und in größeren Leitungssystemen mit langen Rohrstrecken sogar mit 6 bis hin zu 8 Induktionsspulen.

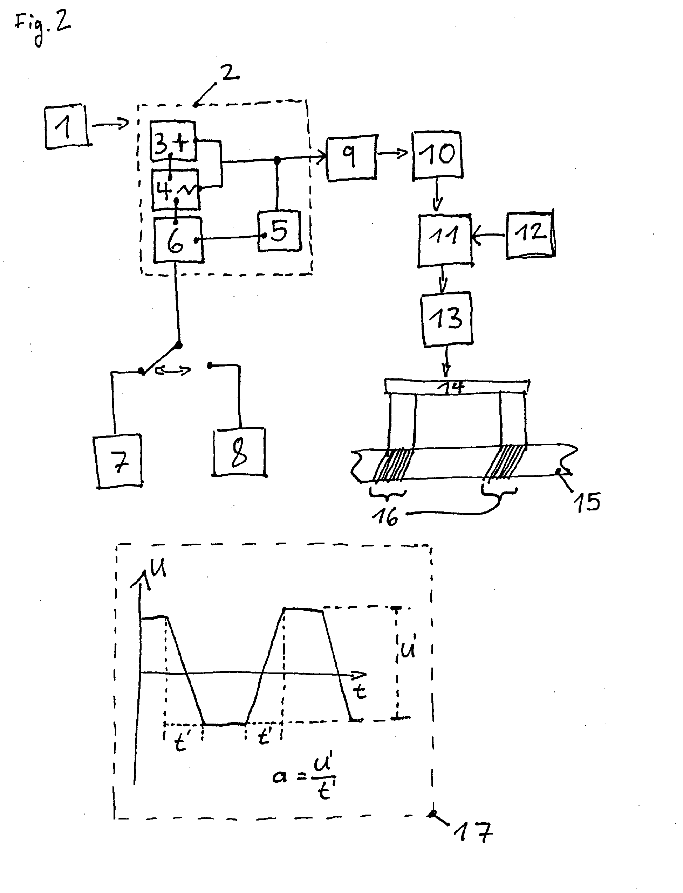

Die erfindungsgemäße Vorrichtung wird durch die beigefügte schematische Darstellung eines Blockdiagramms gemäß Fig. 2 näher erläutert. Der integrierte Schaltkreis (IC) 2 ist an eine 12 V Gleichspannungsquelle angeschlossen. Er umfasst einen spannungsabhängigen Generator 3, einen Rampengenerator 4 sowie einen Scanner 6 zur Frequenzvorgabe. Der Frequenzbereich des Scanners wird wahlweise über ein fest eingestelltes Potentiometer 7 oder einen im Leitungssystem angebrachten Durchflussmesser 8 variiert. Das frequenzgesteuerte Summensignal aus Generator und Rampengenerator wird unter Steuerung der Pulszahl über einen Zählerbaustein 5 mit Hilfe eine Transistorbrückenschaltung in ein Gegentaktsignal umgewandelt und über einen Strom-Spannungs-Wandler 11 mit angeschlossenem Leistungsnetzteil 12 in ein Wechselstromsignal umgeformt. Dieses alternierende Signal wird über eine Verstärkerstufe 13 und eine Verteilerstufe 14 auf die Induktionsspulen 16 gelegt, welche beidends der Messstrecke am Rohr 15 jeweils ein gleichsinnig zur Flussrichtung des Wassers orientiertes Feld erzeugen. Die Spannungskurve 17 in Abhängigkeit der Zeit ist hier als Trapezspannung ausgeführt, wobei die Steigung a im Betrag mit Hilfe der Steuerlogik des IC in Wechselwirkung mit der VD-Einstellung und dem Signal des Potentiometers 7 oder Flussmessers 8 stets im erfindungsgemäßen Bereich gehalten wird. Des Weiteren umfasst die Steuerelektronik des Calc Tech Gerätes noch eine interne sowie eine externe Fehlererkennung.

In einer vereinfachten Ausführungsform für Leitungssysteme mit geringem, konstantem Durchlauf kann der IC 2 fest mit einem Potentiometer 7 verdrahtet werden und die Signal- und Pulsveränderung der Baugruppen 10 bis 13 entfällt. Das Signal wird hier über die Transistorbrückenschaltung 9 in eine Wechselspannung mit erfindungsgemäß steilen Flanken umgewandelt. Bei etwas höherem Wasserverbrauch wird ein Leistungsnetzteil 12 für die Ausgangstreiber in Form von Gleichspannung eingesetzt.

Alternativ kann in einer weiteren Ausführungsform der erfindungsgemäßen Vorrichtung in der Transistorbrückenschaltung 9 aus einer Gleichspannung direkt ein Gegentaktsignal erzeugt werden.

In einer vielseitigeren Ausführungsform umfasst das Calc Tech Gerät mehrere, synchron ansteuerbare Baugruppen zur Signalverstärkung (11, 12 und 13). Dies erlaubt das kurzfristige Anpassen der Gesamtleistung an Leitungssysteme mit stark schwankenden Anforderungen wie z. B. im Technikumsbereich. Leistungen von 2 Watt bis hin zu mehreren Kilo Watt können so in Stufen bereitgestellt werden (entspricht Dauerwechselströmen von 0,1 A über 10 A bis hin zu mehren hundert Ampere).

Sämtlichen Schaltungen haben gemeinsam, dass sie Pulse erzeugen, deren Spannungsveränderung im Betrag in Abhängigkeit der Zeit mindestens um 20 Volt pro Mikrosekunde bis hin zu 1 kVolt pro Mikrosekunde liegen. Die Signalform bzw. der zeitliche Verlauf der Spannung insgesamt ist dabei durch die einzelnen Baugruppen bedingt (z. B. Rechteckspannung, Sägezahnspannung, Trapezspannung mit steiler Flanke und mit oder ohne Übersteuerungssignalen durch Umschalten oder höhere harmonische Frequenzen usf.).

In einer weiteren vielseitigen Ausführungsform umfasst die erfindungsgemäße Vorrichtung digital ansteuerbare Wechsel- und Frequenzumrichter in Kombination mit Frequenzfiltern. Dies ermöglicht das kontrollierte Einstellen des zeitlichen Spannungsverlaufs, der Amplitude des Pulses, der Stromspannungscharakteristik sowie das Bereinigen des Signals, um leistungsmindernde Induktionen und höhere harmonische Schwingungen bzw. Wechselwirkungen mit von Außen einwirkenden Feldern zu vermeiden. So können Umschaltstromspitzen von 200 A bis hin zu mehreren kA gefiltert bzw. ausgesteuert werden.

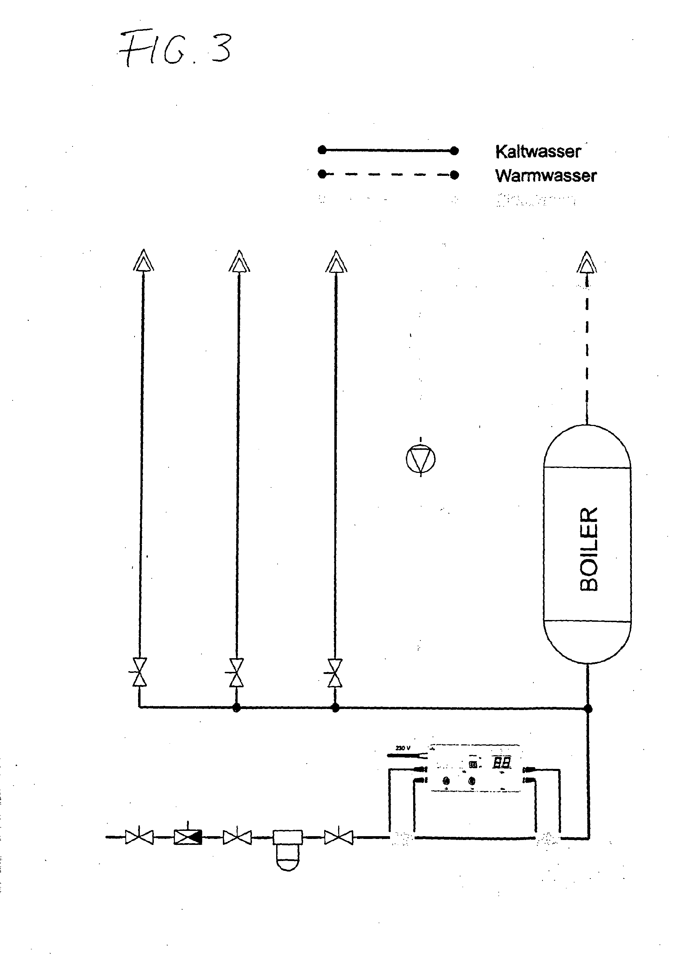

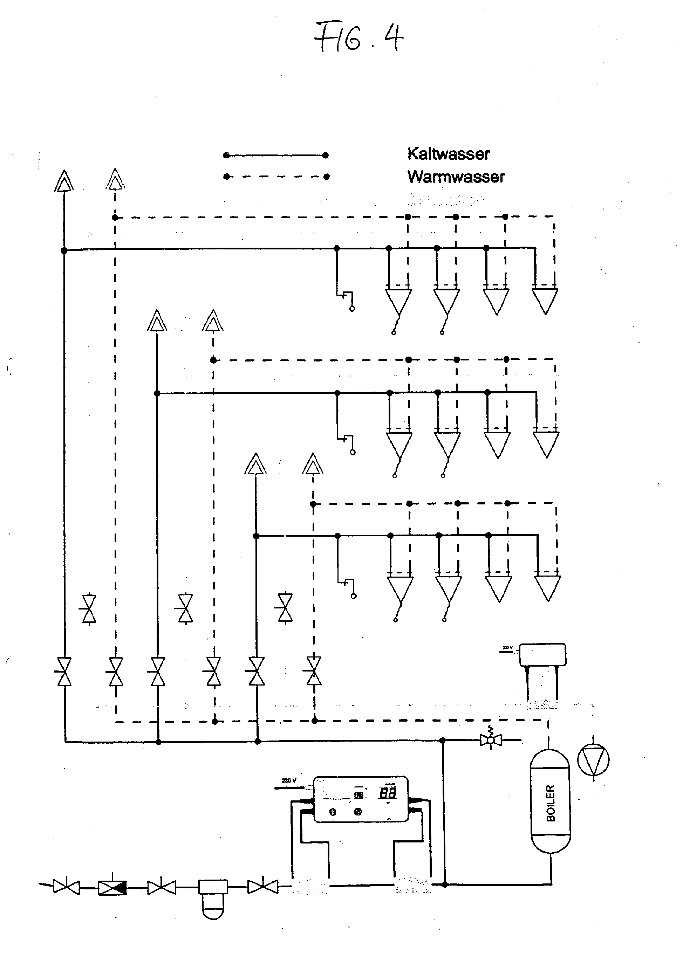

Weitere Montagebeispiele der erfindungsgemäßen Vorrichtung sind in Fig. 3 und 4 veranschaulicht. Während in Figur 3 das Flussbild mehrerer Verbraucher wiedergegeben wird, von denen ein Verbraucher separat einen Boiler verwendet, die sämtlich mit erfindungsgemäß behandeltem Wasser versorgt werden, wird in Fig. 4 ein größeres Leitungsnetz mit integriertem Boiler und einem zusätzlich, separat für den Boiler arbeitendes Calc Tech Gerät veranschaulicht. Das Wirkprinzip des an einen Durchflussmesser angeschlossenen Calc Tech Gerätes ist dabei identisch. Auf die Induktionsspulen wird ein Wechselstromsignal gegeben. Die in der Steuerelektronik integrierten Generatoren erzeugen den erfindungsgemäßen Puls und variieren permanent die Ausgangsfrequenz so, dass bei jedem Sweepzyklus zweimal die der jeweiligen Wasserfließgeschwindigkeit entsprechende Frequenz an den Induktoren ansteht. Das Signal des Generators ist abschnittsweise in einzelne Glieder faltbar und damit kann die Projektion der Glieder auf die gefaltete Länge einen Regelbereich für die Einwirkung liefern. Dies Ausbildung ermöglicht durch engere oder weitere Faltung eine Anpassung an die gewünschte Frequenz. Die Leistung der Generatoren und die Leistung der Spannungssysteme werden derart zusammengeführt, dass die Intensität der Generatoren gemeinsam über einen Treiber, zum Ausgang, und zu den beidends vorgesehenen Spulen führen, wobei die Magnetlinien gleichgerichtet sind.

Es ist weiter vorgesehen, dass durch die beidendig angeordneten Spulen ein in Abhängigkeit der Durchflussmenge modifizierter Wechselstrom mit einer von 0 bis 10 kHz, vorzugsweise 10 Hz bis 6 kHz reichenden Frequenz fließt. So wurden bei einer Fließgeschwindigkeit von 0,1 m/s in einer normalen Hauswasserleitung (Durchmesser 2,54 cm) mit bereits 50 Pulsen pro Sekunde gute Ergebnisse erzielt. Das Leistungsoptimum relativ zum Energieaufwand konnte unabhängig von der Härte ab etwa 70 Pulsen erzielt werden. Höhere Intensitäten wie 100 bis 150 Pulse pro Sekunde erhöhen die Wirksamkeit nur noch unwesentlich. Die optional mit Durchflussmessern verbundene Regelelektronik in dem Calc Tech Gerät sorgt dafür, dass bei unterschiedlichen Wasserfließgeschwindigkeiten die Behandlung des Wassers an den Wasserdurchsatz angepasst wird.

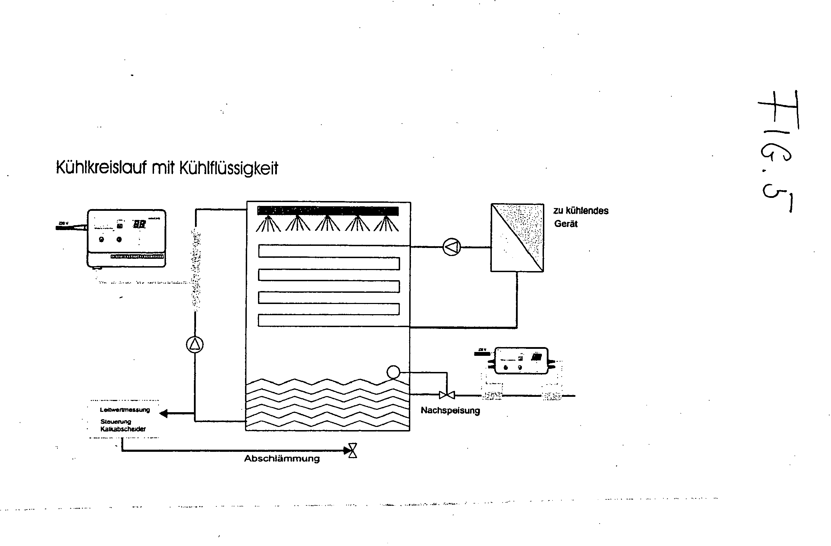

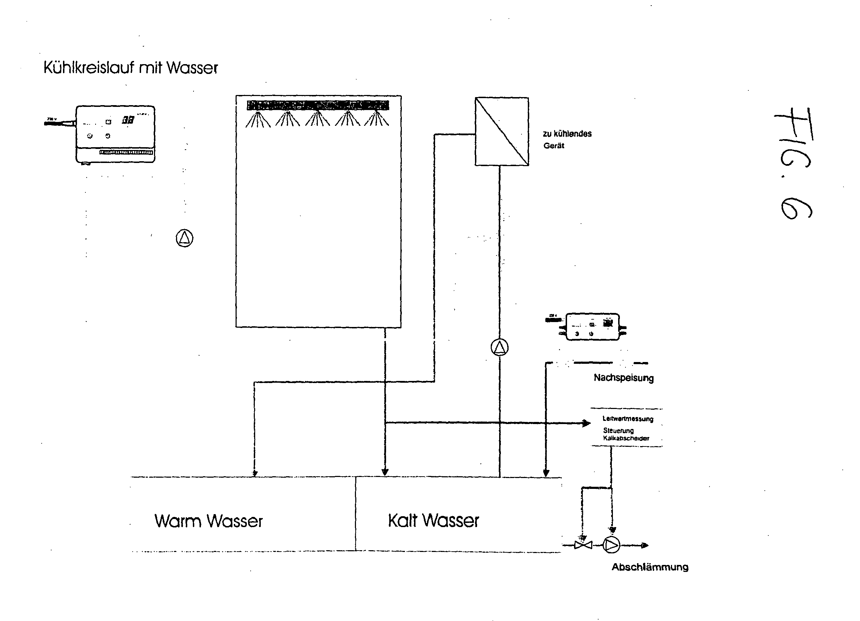

Des weiteren eignet sich das erfindungsgemäße Calc Tech Gerät auch zur Behandlung von Kühlwasser. Zwei Ausführungsbeispiele sind in Fig. 5 und 6 dargestellt.

Eingebaut werden in die Kühlwasserkreisläufe folgende erfindungsgemäß ausgebildete Calc Tech Geräte:
- Kondensatorkreislauf: Kondensatorleistung 1700 kW
   Wassermenge 140 m/h
   Benötigt: 1 Calc Tech Gerät
   (35 W Leistung, 1 Hz bis 10 kHz, Potentiometer)
- Ölkühlerkreislauf: Ölkühlerleistung 255 kW
   Wassermenge 33 m/h
   Benötigt: 1 Calc Tech Gerät
   (10 Watt Leistung, 0 Hz bis 6 kHz, Potentiometer)
- Frischwasserkreislauf: Trink- / Brauchwasserbrunnen
   Wassermenge 5 m/h (mehrere Ausläufe)
   Benötigt: 1 Calc Tech Gerät
   (5 Watt Leistung, 0 Hz bis 6 kHz, Potentiometer)

Über die Potentiometereinstellungen wird die Pulsfrequenzbegrenzung festgelegt. Da es sich um konstante Abnahmemengen handelt, sind Durchflussmesser nicht nötig.

Durch den Einsatz des optimierten Calc Tech Gerätes wird bei geringerem Energieverbrauch und Konstruktionsaufwand effektiv verhindert, dass sich an den heißen Rohroberflächen der Verdunstungskondensatoren und den Ölkühlern der Schraubenverdichter-Aggregate Kalk absetzt, und es damit zu einer Leistungsminderung kommt.

Entsprechend dem Aufbau des Wasserkreislaufes setzt sich der Kalk im Wasserzwischenbehälter ab und kann über ein Entleerungsventil abgelassen werden.

Das erfindungsgemäße Verfahren und das erfindungsgemäß arbeitende Calc Tech Gerät erzeugt bei geringerem Energieverbrauch und einfacherer, weniger störanfälliger Bauweise im Wasser alternierende, elektromagnetische Felder mit variierender Frequenz, die mikrofeine Kalkkristalle verursachen, wodurch verhindert wird, dass größere Kalkkristalle entstehen. Die mikrofeinen Kristalle haben keine Haftfähigkeit, sie werden von dem Wasser ausgespült. Das Calc Tech Gerät passt sich permanent an die Impulse, so dass auch bei langsam fließendem Wasser eine optimale Wirkung erreicht wird.

Zusammenfassend betrifft die vorliegende Erfindung ein Verfahren und eine Vorrichtung Verfahren und Vorrichtung zur Behandlung von Wasser mit einem gepulsten, elektromagnetischen Feld, bei dem über eine Strecke des wasserführenden Rohres 15 beidends über Induktionsspulen 16 ein Magnetfeld erzeugt wird, dessen Intensität durch Steuerung der Frequenz von Impulsen einstellbar ist, die in einem integrierten Schaltkreis IC 2 erzeugt werden. Die Intensität wird durch Begrenzen der Frequenz mit einem Durchflussmesser 8 in Abhängigkeit der Wasserdurchgangsleistung oder über ein fest einstellbares Potentiometer 7 in Abhängigkeit des mittleren Wasserverbrauchs und des Rohrdurchmessers geregelt, wobei die sich ändernde Frequenz des in dem IC 2 gebildeten Summensignals, erzeugt aus dem Signal eines Rampengenerators 4, dessen Frequenz von einem Scanner 6 über einen Zählerbaustein 5 variiert wird, und dem Signal eines spannungsabhängigen Generators 3, ein frequenzgesteuertes erstes Signal darstellt, das über eine Transistorbrückenschaltung 9 und einen Gegentaktverstärker 10 umgeformt und anschließend wiederum zu einem Signal aus einem Spannungsstromwandler 11 mit angeschlossenem Leistungsnetzteil 12 addiert wird. Das erstellte Signal wird auf den Eingang einer Verstärkerstufe 13 gegeben und von dort aus als Wechselspannung, die hier als "Gegentaktspannung" genutzt wird, auf die wirkungsgleichgerichteten Windungen der Induktionsspulen 16 gelegt, deren elektromagnetisches Feld sich mit den physikalischen Eigenschaften der durchfließenden Frequenz ändert, wobei die zeitliche Änderung der Spannung pro Puls mindestens 20 Volt pro Mikrosekunde beträgt. Der Begriff "Gegentaktspannung" soll zum Ausdruck bringen, dass eine Umpolung des Vorzeichens (wie bei einer Wechselspannung) erfolgt.

### Bezugszeichenliste

- 1): 12 V Stromversorgung
- 2): IC mit Steuerlogik
- 3): Spannungsgesteuerter Generator
- 4): Rampengenerator
- 5): Zählerbaustein
- 6): Scanner
- 7): Potentiometer
- 8): Durchflussmesser
- 9): Transistorbrückenschaltung
- 10): Gegentaktverstärker
- 11): Spannungs-Stromwandler
- 12): Leistungsnetzteil
- 13): Verstärkerstufe
- 14): Verteilerstufe für die Induktoren
- 15): Rohr
- 16): Induktionsspulen
- 17): U-t-Diagramm mit Kennwert a

## Patentansprüche

1. Vorrichtung zur Behandlung von Wasser mit einem gepulsten elektromagnetischen Feld, bei der beidends der Messstrecke eines Rohres (15) mindestens 2 Induktionsspulen (16) montiert sind, wobei die Intensität des Feldes durch Steuerung der Frequenz der Impulse einstellbar ist und die Impulse mit einem integrierten Schaltkreis IC (2) erzeugt werden, **dadurch gekennzeichnet,**
**dass** der IC (2) an eine 12 V Stromversorgung (1) angeschlossen ist und einen spannungsgesteuerten Generator (3), einen Rampengenerator (4), einen Zählerbaustein (5) sowie einen Scanner (6) umfasst, wobei der Scanner (6) mit einem Frequenzbegrenzer in Form eines extern einstellbaren Potentiometers (7) verbunden ist,
**dass** im IC (2) der Generator (3) als Signalquelle additiv mit dem frequenz ― und spannungsgesteuerten Rampengenerator (4) verbunden ist, wobei Scanner (6) als Frequenzquelle und Zählerbaustein (5) als Steuereinheit der Pulszahl pro Zeiteinheit mit dem Rampengenerator und der Signalausgangsleitung verbunden sind,
**dass** die Signalleitung für das frequenz- und spannungsgesteuerte Summensignal des IC (2) mit einer Transistorbrückenschaltung (9) als Signalwandler mit einer Gesamtschaltgeschwindigkeit von maximal einer Mikrosekunde pro Puls verbunden ist, und
**dass** die Signalausgangsleitung der Transistorbrückenschaltung (9) über einen Gegentaktverstärker (10) und einen Strom-Spannungs-Wandler (11) mit angeschlossenem Leistungsnetzteil (12) in eine Verstärkerstufe (13) führt, welche für Spannungsamplituden von mindestens 20 Volt pro Puls ausgelegt ist und signalausgangsseitig mit den wirkungsgleichgerichteten Windungen der Induktionsspulen (16) verbunden ist.

2. Vorrichtung nach Anspruch 1, **dadurch gekennzeichnet, dass** als Frequenzbegrenzer statt des Potentiometers (7) ein Durchflussmesser (8) mit dem Scanner (6) verbunden ist.

3. Vorrichtung nach einem der vorhergehenden Ansprüche, **dadurch gekennzeichnet, dass** zwischen Verstärkerstufe (13) und Induktionsspulen (16) eine Verteilerstufe (14) montiert wird, über die die Signalausgangsleitung der Verstärkerstufe (13) mit den wirkungsgleichgerichteten Windungen der Induktionsspulen (16) verbunden ist.

4. Vorrichtung nach einem der vorhergehenden Ansprüche, **dadurch gekennzeichnet, dass** die Transistorbrückenschaltung (9) als Gegentaktsignalquelle ausgeführt ist.

5. Vorrichtung nach einem der vorhergehenden Ansprüche, **dadurch gekennzeichnet, dass** die Transistorbrückenschaltung (9) als alternierende Signalquelle ausgeführt ist.

6. Vorrichtung nach einem der vorhergehenden Ansprüche, **dadurch gekennzeichnet, dass** das Leistungsnetzteil (12) des Spannungs-Stromwandlers als Gleichstromquelle ausgeführt ist.

7. Verfahren zur Behandlung von Wasser mit einem gepulsten elektromagnetischen Feld, welches beidends einer Messstrecke eines Wasser führenden Rohres (15) mit Induktionsspulen (16) erzeugt wird, **dadurch gekennzeichnet,**
**dass** in einem IC (2) ein Signal aus einem spannungsabhängigen Generator (3) zu einem durch einen Scanner (6) frequenzgesteuerten Signal eines Rampengenerators (4) in Wechselwirkung mit einem Zählerbaustein (5) addiert wird,
**dass** die Frequenz des Scanners proportional zum Rohrdurchmesser und zum durchschnittlichen Wasserverbrauch zwischen 0 Hz und 10 kHz ausgewählt wird,
**dass** das Summensignal des IC (2) über eine Transistorbrückenschaltung (9) mit nachfolgendem Gegentaktverstärker (10) in ein Gegentaktsignal und anschließend mit einem Spannungs-Stromwandler (11) mit angeschlossenem Leistungsnetzteil (12) in ein Signal mit alternierender Spannung umgewandelt wird, und
**dass** das so erzeugte Signal als Wechselspannung über eine Verstärkerstufe (13) zur Felderzeugung auf die beidends der Messtrecke des Rohres (15) wirkungsgleichgerichtet angebrachten Induktionsspulen (16) aufgelegt wird, wobei die Änderung der Spannung pro Puls mit einer Geschwindigkeit von mindestens 20 Volt pro Mikrosekunde erfolgt.

8. Verfahren nach Anspruch 7, **dadurch gekennzeichnet, dass** die Frequenz des Scanners proportional zu dem mittels eines Durchflussmessers gemessenen momentanen Wasserverbrauch zwischen 0 Hz und 10 kHz ausgewählt wird.

9. Verfahren nach Anspruch 7 oder 8, **dadurch gekennzeichnet, dass** das erzeugte Signal über eine Verteilerstufe (14) auf mehrere, wirkungsgleichgerichtete Spulen aufgelegt wird.
